# EUROPEAN PATENT APPLICATION

(11) **EP 1 306 194 A2**
(43) Date of publication of application: **02.05.2003**
(21) Application number: 02079100.0
(22) Date of filing: 02.10.2002
(51) Int. Cl.: B29C 49/64, B29C 49/42

(54) **Machine for blow moulding containers from cold parisons with step for conditioning said parisons.**

(30) Priority: 24.10.2001 IT MI20012231
(71) Applicant: Magic MP S.p.A., Seregano (Milano) (IT)
(72) Inventor: Giacobbe, Ferruccio, Monza (MI) (IT)
(74) Representative: Raimondi, Alfredo, Dott. Ing. Prof.

(57) **Abstract**

Machine for blow-moulding containers (1a) from cold parisons (1), comprising at least one loading station (100), at least one heating station (200), at least one station (400) for blowing the parisons (1) and at least one station (500) for unloading the moulded containers (1a), wherein at least one station (300) for conditioning the parisons (1), arranged upstream of the blowing station (400), is provided.

## Description

The present invention relates to a machine for blow-moulding containers from cold parisons, comprising at least one station for conditioning the parisons, arranged upstream of the blowing station.

It is known in the technical sector relating to the packaging of liquid products and the like that there exists the need to manufacture containers made of plastic material suitable for this purpose.

It is known that said containers are formed in suitable machines where a predefined quantity of material is injected into a mould and is then subjected to a first mechanical moulding deformation in order to obtain a so-called "parison"; the latter is then subjected to a thermal conditioning process and inserted into a mould for deformation by means of blowing which determines the final shape of the container.

Said cycle may be performed continuously on a single machine or divided into two separate stages performed on different machines, i.e.:
- a machine for manufacturing the "parisans" which are cooled and stored for subsequent supplying;
- a different and separate machine where final moulding of the container by means of blowing is performed.

It is also known that with the current machines for blowing containers from cold parisons it is possible to obtain only very simple (substantially cylindrical) shapes of containers, where stretching of the material is substantially constant over the whole surface, it not being possible to obtain, however, more complicated shapes for which varied movements of the material during blowing is required.

This also in view of the hourly speed of production of the machine which cannot fall below certain limits, where production would no longer be economic.

The technical problem which is posed, therefore, is that of providing a machine for blowing containers from cold parisons which allows the most widely varying final forms of the blown container to be obtained.

Within the scope of this problem a further requirement is that the machine should allow high hourly production outputs and should perform the entire cycle automatically from loading of the parisons to unloading of the finished container.

These technical problems are solved according to the present invention by a machine for blow-moulding containers from cold parisons, comprising at least one loading station, at least one heating station, at least one station for blowing the parisons and at least one station for unloading the moulded containers, wherein at least one station for conditioning the parisons, arranged upstream of the blowing station, is provided.

Further details may be obtained from the following description of a non-limiting example of embodiment of the invention, provided with reference to the accompanying plates of drawings in which:
- Figure 1 shows a schematic section along a longitudinal vertical plane of the machine according to the present invention;
- Figure 2 shows a schematic section along the plane indicated by II-II on Fig. 1;
- Figure 3 shows a schematic section along the plane indicated by III-III in Fig. 1 with the parison entering the conditioning station; and
- Figure 4 shows a section similar to that of Fig. 3 with the parison during the conditioning step.

As illustrated, the machine according to the invention comprises at least one loading station 100, at least one heating station 200, at least one conditioning station 300, at least one station 400 for blowing the parisons 1 and at least one station 500 for unloading the moulded containers 1a.

In greater detail the parisons 1, in the cold state, are removed randomly from an associated container and positioned on hollow bases 101 arranged on a surface 102 movable, upon operation of associated actuator means 102a, in a vertical direction from a lowered position to a raised position so that the parisons 1 can be removed by an associated gripping/holding unit 110 which comprises jaws 111 integral with an element 112 for transportation of the said gripping means and able to be operated so as to open/close by associated operating means 113 integral with the machine in the area of the said entry station 100.

Said gripping unit forms the subject of a co-pending patent application filed on the same date in the name of the present applicant.

Once the parison has been gripped by the said unit 110 it starts to be transported through the various stations of the machine; in a preferred embodiment the means 600 for transportation of the parisons comprise a chain 601 arranged longitudinally over the whole length of the machine and endlessly wound on two toothed wheels, one of which is motorised.

Said chain is suitable for engagement with corresponding pinions 602 integral with the support element 112 which is thus brought to the heating station 200 in which the parisons 1 pass through heating ovens 210 which convert the material of the parisons into the plastic deformable state.

Upon leaving the heating station 200 the parisons reach the conditioning station 300 where they undergo a treatment involving partial cooling of some suitable parts of their surface.

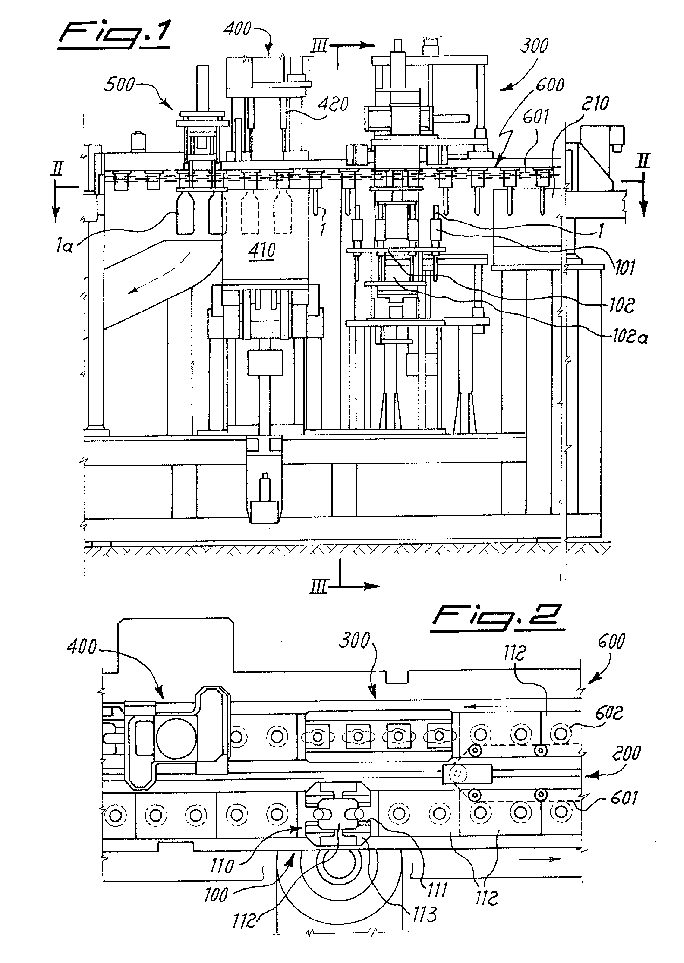

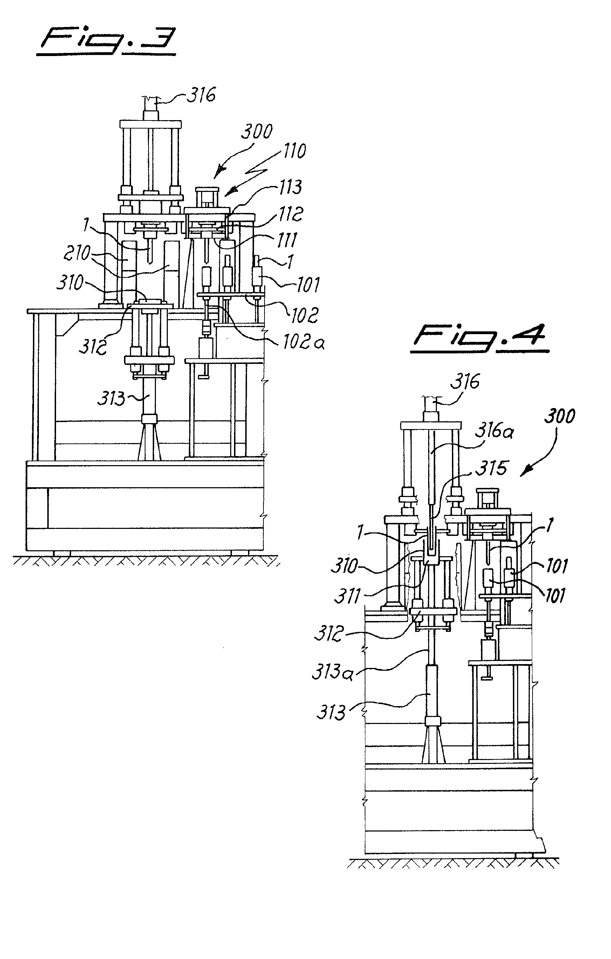

In greater detail (Figs. 3,4) the conditioning station 300 is provided with a container 310 in which there is at least one seat 311 for receiving the parison 1; said container 310 is arranged on a surface 312 integral with the rod 313a of a fixed cylinder 313, so that it can be displaced from a lowered position for disengagement from the parison 1 to a raised position for containing the said parison.

Coaxially with the parison 1, but on the opposite side to the latter with respect to the container 310, there is also provided a blade 315 integral with the rod 316a of a fixed cylinder 316. Said blade is kept at a temperature suitably lower than the temperature for transition to the deformable state of the parison, so as to cause cooling of the parts which come into contact with the said blade.

In addition to this, the blade 315 has a shape and dimensions such that it can be inserted inside the parison 1 in order to cause the programmed cooling of some parts of its surface.

Once conditioning has been performed during the predefined cycle time, the parison 1 enters the blowing mould 410 where it undergoes deformation by means of introduction of pressurised air through corresponding nozzles 420, the function of which is conventional per and therefore not described in detail.

Once the blowing and cooling cycle has been terminated, the transportation element 112 conveys the moulded container 1a to the unloading station where suitable fixed operating devices open the gripping devices in order to cause falling of the parisons, while the transportation element 112 returns to the loading station for the start of a new cycle.

It is therefore obvious how the machine according to the invention allows the execution of a conditioning treatment of the parisons 1 before blowing thereof, thus making it possible to obtain shapes of finished containers with large relative differences between the axes of their horizontal sections.

According to the invention it is envisaged moreover that the conditioning station has a plurality of conditioning seats, arranged in series, so as to divide up the conditioning time into several time intervals which increase the hourly production output of the machine since, for each parison or pair of parisons which enter into conditioning station, there is a parison/pair of parisons which enters into the blowing mould.

As can be seen from Fig. 2, in an example of embodiment of the machine the conditioning station has four seats 311, while a single transportation element 112 has two parisons 1; consequently two support elements and therefore four parisons at the same time are able to enter into the conditioning station, halving in this way the cycle time of a parison and therefore the time for the moulded container to exit from the machine.

Within the limits imposed by the time required by the blowing station to complete all its working steps, it will therefore be possible to vary the length/division of the conditioning station in order to obtain the maximum hourly production possible.

The machine according to the invention also allows the transportation of parisons by means of the neck 1b and therefore opening thereof, in a position above the bottom of the said parison, which facilitates the design of the conditioning station and improves the conditioning operation itself.

In a preferred embodiment of the machine it is envisaged that, upstream of the conditioning station 300 there is a station (not shown) for orienting the parison so that, in the following station 300, conditioning occurs in such a way as to cause cooling of parts of its surface which are always arranged in the same zone and always on the same side with respect to the direction of movement of the parison.

This allows the production of a moulded bottle with elements for identifying the front side and/or rear side, necessary for the subsequent operations involving screwing of asymmetrical lids.

The machine according to the invention has been described in a preferred embodiment of the rectilinear type; it is envisaged, however, that the configuration of the machine may also be different, for example circular.

According to the invention a method for blow-moulding containers from cold parisons is also envisaged, said method comprising the steps of:
- feeding the cold parisons to means for gripping and transporting them;
- transporting the parisons inside heating means;
- heating the parisons;
- transporting the heated parisons to a conditioning station;
- conditioning the parisons by means of cooling of some parts of their surface;
- feeding the conditioned parisons to the blowing station;
- blowing, cooling and unloading the moulded containers.

Within the context of this method, there are preferred modes of implementation thereof whereby:
- conditioning is performed both inside and outside the parison;
- conditioning is divided up into several stages in order to shorten the cycle time of the machine, increasing its hourly production output.

In addition to this, it is envisaged that the method may comprise a step for orienting the parison in order to cause cooling of parts of its surface always arranged in the same zone and always on the same side with reference to the direction of movement of the parison.

As a result of this it is possible to obtain a moulded bottle with elements for identifying the front side and/or rear side, necessary for the subsequent operations involving the screwing-on of asymmetrical lids.

## Claims

1. Method for blow-moulding containers from cold parisons, comprising the steps of:
- feeding the cold parisons to means for gripping and transporting them;
- transporting the parisons inside heating means;
- heating the parisons;
- feeding the conditioned parisons to the blowing station;
- blowing, cooling and unloading the moulded containers,
**characterized in that** it comprises a step involving conditioning of the parisons upstream of the blowing step.

2. Method according to Claim 1, **characterized in that** said conditioning of the parisons consists in cooling some parts of their surface.

3. Method according to Claim 1, **characterized in that** conditioning is performed both inside and outside the parison.

4. Method according to Claim 1, **characterized in that** the conditioning step is divided up into several stages.

5. Method according to Claim 1, **characterized in that** it comprises a further step involving orientation of the parisons upstream of the conditioning step.

6. Machine for blow-moulding containers (1a) from cold parisons (1), comprising at least one loading station (100), at least one heating station (200), at least one station (400) for blowing the parisons (1) and at least one station (500) for unloading the moulded containers (1a), **characterized in that** it comprises at least one station (300) for conditioning the parisons (1), arranged upstream of the blowing station (400).

7. Machine according to Claim 6, **characterized in that** said loading station comprises hollow bases (101) arranged on a surface (102) movable, upon operation of associated actuator means (102a), in the vertical direction from a lowered position to a raised position, and vice versa, so that the parisons (1) may be removed by an associated gripping unit (110).

8. Machine according to Claim 7, **characterized in that** said gripping unit comprises jaws (111) integral with an element (112) for transportation of the said gripping means and able to be operated so as to open/close around the neck of the parison by associated operating means (113) fixed to the machine in the area of said entry station (100).

9. Machine according to Claim 6, **characterized in that** said support element (112) has at least one pinion (602) suitable for engagement with corresponding means for transportation thereof through the various machine stations.

10. Machine according to Claim 9, **characterized in that** said means (600) for transportation of the parisons comprise a chain (601) arranged longitudinally along the length of the machine and endlessly wound on two toothed wheels, at least one of which is motorised.

11. Machine according to Claim 6, **characterized in that** said conditioning station (300) is provided with a container (310) inside which there is at least one seat (311) for receiving the parison.

12. Machine according to Claim 11, **characterized in that** said container (310) is arranged on a surface (312) integral with the rod (313a) of a fixed cylinder (313) so that it can be displaced from a lowered position where it is disengaged from the parison (1) into a raised position for containing the said parison.

13. Machine according to Claim 6, **characterized in that**, coaxially with the parison (1), a blade (315) is provided, the same being integral with means for actuating it from it a position where it is extracted from the parison into a position where it is inserted in the parison.

14. Machine according to Claim 13, **characterized in that** said means for actuating the blade (315) consist of the rod (316a) of a fixed cylinder (316).

15. Machine according to Claim 13, **characterized in that** said blade (315) is kept at a temperature suitably lower than the temperature for transition to the deformable state of the parison.

16. Machine according to Claim 6, **characterized in that** said conditioning station (300) has a plurality of conditioning seats (311) arranged in series so as to divide up the conditioning time into several time intervals.

17. Machine according to Claim 16, **characterized in that** the conditioning station has a number of seats (311) and blades (315) which is double the number of parisons (1) transported by the transportation element (112).

18. Machine according to Claim 6, **characterized in that** the neck (1b) of the parison and therefore opening thereof is in a position above the bottom of the said parison.

19. Machine according to Claim 6, **characterized in that** a station for orienting the parison is present upstream of the conditioning station (300).

20. Machine according to Claim 6, **characterized in that** it is of the rectilinear type.
